# EUROPÄISCHE PATENTSCHRIFT

(11) **EP 1 828 340 B1**
(45) Veröffentlichungstag und Bekanntmachung des Hinweises auf die Patenterteilung: **14.01.2009**
(21) Anmeldenummer: 05820640.0
(22) Anmeldetag: 21.12.2005
(51) Int. Cl.: C09J 123/00

(54) **SCHMELZKLEBSTOFF**
HOT-MELT ADHESIVE
COLLE FUSIBLE

(30) Priorität: 22.12.2004 DE 102004063021; 19.02.2005 DE 102005007770
(43) Veröffentlichungstag der Anmeldung: 05.09.2007
(73) Patentinhaber: Henkel AG & Co. KGaA, 40589 Düsseldorf (DE)
(72) Erfinder: HOFFMANN, Gunter, 73441 Bopfingen (DE); GRAUEL, Ralf, 40724 Hilden (DE); SCHOLTA, Richard, 51069 Köln (DE); MÖLLER, Thomas, 40593 Düsseldorf (DE); EBERHARDT, Ralf, 73430 Aalen (DE)
(86) Internationale Anmeldenummer: PCT/EP2005/013760
(87) Internationale Veröffentlichungsnummer: WO 2006/069687

(56) Entgegenhaltungen:
- WO-A-96/40830
- DE-A1- 19 522 568
- DE-A1-2102004 030 43
- US-A- 4 762 878
- US-A- 4 952 639

## Beschreibung

Die Erfindung betrifft einen Schmelzklebstoff auf der Basis mindestens eines aromatisch modifizierten Polyethylen- und/oder Polypropylen-(Co)polymeren, eines weiteren Ethylen oder Propylen/C₄ bis C₂₀-α-Olefin Copolymeren, mindestens eines klebrig machenden Harzes, sowie Wachsen und Additiven. Die Erfindung betrifft ebenso die Herstellung dieses Schmelzklebstoffes sowie seine Verwendung.

Unter Schmelzklebstoffen werden Klebstoffe verstanden, die als Schmelze auf die zu verklebenden Teile aufgetragen werden und beim Abkühlen unter Verfestigung abbinden. Schmelzklebstoffe finden eine breite industrielle Anwendung, beispielsweise werden sie in der Verpackungs- und Papierindustrie zum Versiegeln und Verschließen von Kartons oder zum Laminieren mehrschichtiger Papiere verwendet. Die Anforderungen, die solche Schmelzklebstoffe für die unterschiedlichen Applikationen erfüllen müssen, sind vielfältig:

So müssen die Schmelzklebstoffe eine mittlere bis lange Offene Zeit (definiert als Zeitspanne zwischen Klebstoffauftrag und dem Zusammenfügen der Fügeteile) besitzen, aber nach Fixierung der Fügeteile schnell genug abbinden, um eine qualitätsgerechte Verklebung, insbesondere auf schnelllaufenden Verpackungsmaschinen zu gewährleisten. Neben der Abbindegeschwindigkeit ist die Viskosität ein wichtiges Kriterium für die Auswahl des Schmelzklebstoffes. Für die maschinelle Verarbeitung, speziell für einen gleichmäßigen Schmelzklebstoffauftrag, sollte die Viskosität bei entsprechender Applikationstemperatur ausreichend niedrig sein. Für Verklebungen von Verpackungen im Tiefkühlbereich sollte eine entsprechende Kälteflexibilität vorhanden sein. Das heißt in der Kälte sollte eine hohe Festigkeit der Klebe-Bindung bestehen und der Klebstoff nicht verspröden oder brechen.

Andererseits werden häufig warm oder heiß abgefüllte Lebensmittel oder Getränke verpackt, so dass hier eine entsprechend hohe Wärmefestigkeit des Klebstoffes, die in der Regel mit einer hohen Viskosität einhergeht, gefordert ist. Unter ausreichend hoher Wärmestandfestigkeit ist zu verstehen, dass der abgebundene Klebstoff unter erneuter Einwirkung erhöhter Temperatur nicht unmittelbar erweicht und sich dadurch die Verklebung löst und /oder die verklebten Teile sich gegeneinander verschieben. Weiterhin ist insbesondere für die Lebensmittelindustrie gefordert, möglichst geruchsfreie oder geruchsarme Schmelzklebstoffe bereitzustellen.

Schmelzklebstoffe auf Basis von Polyethylen- oder Polypropylen-Homo- oder Copolymeren sind bekannt. Die DE 696 02 035 T2 beschreibt beispielsweise einen Verpackungs-Schmelzklebstoff, der als Bestandteile mindestens ein Ethylen-n-Butylacrylat-Copolymeres enthält, ein Kolophoniumester-Klebrigharz, ein mikrokristallines Wachs oder Paraffin-Wachs sowie ein polymeres Additiv, das auch ein Ethylen- oder Propylenhomo- oder -copolymer sein kann.

In der US 6,107,430 wird ein Schmelzklebstoff beschrieben, der mindestens ein lineares homogenes Ethylen/C₃ - C₂₀-α-Olefin-Copolymere enthält, das eine Dichte von 0,850 g/cm³ bis 0,895 g/cm³ aufweist. Dabei soll das Copolymer eine Viskosität von 2000 mPas bis 18000 mPas aufweisen. Eine weitere Modifizierung des Copolymeren wird nicht beschrieben. Der Schmelzklebstoff kann auch Wachs enthalten, wobei eine Ausführungsform Wachs verwendet wird, das auf Basis von Ethylen mit weiteren Comonomeren durch Metallocen-Katalyse hergestellt wird.

Weiterhin ist die US 5,530,054 bekannt, in der ein Schmelzklebstoff beschrieben wird, der im wesentlichen aus einem Copolymer auf Basis von Ethylen und C₄ bis C₂₀ -α-Olefinen besteht und ein Kohlenwasserstoff-Klebrigharz enthält, wobei dieses einen Erweichungspunkt zwischen 70 und 130° C aufweist. Die Ethylen/α-Olefin-Copolymere werden über Metallocen-Katalyse hergestellt und sind in Anteilen von 30 - 70 Gew.-% im Schmelzklebstoff enthalten. Eine Modifizierung dieser Copolymere wird nicht beschrieben.

In der EP 0890584 werden Polypropylenhomo- und -copolymere beschrieben, die auch zur Verwendung in Schmelzklebern geeignet sind. Diese Polymere werden unter Verwendung von Metallocen-Katalysatoren hergestellt und weisen eine Schmelzviskosität von < 90 mPas bei 170° C auf. Als Comonomere werden C₂ bis C₁₈ -Olefine oder -Diolefine beschrieben.

In der WO 00/00565 werden Heißschmelzklebstoffe beschrieben, die 5 bis 50 Gew.% eines im wesentlichen linearen homogenen Ethylen/α-Olefin-Copolymers mit einer Dichte von 0,850 bis 0,965 g/cm³ enthalten, sowie weitere Copolymere und Klebrigharze. Das Molekulargewicht der Ethylen-/α-Olefin-Copolymere beträgt bis zu 100000 g/mol. Die Viskosität der Ethylen/α-Olefin-Copolymeren beträgt zwischen 2000 und 200000 mPas bei 350° F. Es handelt sich ebenfalls um in der Herstellung über Metallocen-Katalyse hergestellte Polymere, die eine enge Molekulargewichtsverteilung aufweisen.

In der DE 199 44 225 werden ebenfalls Schmelzklebstoffe beschrieben, die 30 bis 70 Gew.% eines im wesentlichen amorphen Poly-α-Olefin-Copolymeren enthalten, wobei diese eine Dichte < 0,90 g/cm³ aufweisen sollen sowie eine Schmelzviskosität zwischen 1000 und 20000 mPas. Insbesondere werden Polyolefine beschrieben, die durch radikalischen Abbau von Poly-α-Olefinen hergestellt werden können. Ebenso wird zur Verbesserung der Verträglichkeit beschrieben, diese Polymere mit ungesättigten Carbonsäuren oder ihren Anhydriden zu modifizieren.

Die DE 102004030432 beschreibt Folien, die eine glatte, keine Klebeschicht aufweisende Fläche und eine raue Fläche besitzen. Dabei soll die glatte Fläche aus thermoplatischen Blockcopolymeren bestehen, wobei ein klebrigmachendes Harz enthalten ist. Als Zusatzpolymere sind Polyolefine beschrieben, eine Modifikation dieser Polymere mit aromatischen Bestandteilen ist nicht erwähnt.

Als Nachteile von Schmeizktebstotfen aus dem Stand der Technik wird festgestellt, dass gleichzeitig erforderliche Eigenschaften wie schnelle Abbindung verbunden mit einer möglichst langen offene Zeit sowie niedrige Applikationsviskosität zusammen mit hoher Wärmestandfestigkeit der Klebstoffe schlecht miteinander zu vereinbaren sind. Ebenso ist das Problem einer guten Adhäsion auf verschiedenen Untergründen häufig nicht im gesamten Bereich zufriedenstellend gelöst. Ein weiteres Problem ist es, die Verträglichkeit der einzelnen Komponenten des Klebstoffs sicherzustellen.

Aufgabe der vorliegenden Erfindung ist es deswegen, einen Schmelzklebstoff zur Verfügung zu stellen mit niedriger Applikationsviskosität und guter Adhäsion zum Substrat, der gleichzeitig eine hohe Wärmestandfähigkeit aufweist sowie eine lange offene Zeit zur Verarbeitung in Verbindung mit einer schnellen Abbindung. Weiterhin soll eine Verbesserung der Verträglichkeit der Klebstoffkomponenten erzielt werden.

Die Aufgabe wird dadurch gelöst, dass ein Schmelzklebstoff zur Verfügung gestellt wird, enthaltend 1 bis 40 Gew.-% mindestens eines Homo- oder Copolymeren auf Basis von Ethylen- und/oder Propylen-, das mit aromatischen Bestandteilen modifizierten wurde, 5 bis 80 Gew.-% mindestens eines weiteren, nicht aromatisch modifizierten Olefin-Copolymeren auf Basis Ethylen-und/oder Propylen und C₄ bis C₂₀-α-Olefinen, das durch Metallocen-katalysierte Polymerisation erhältlich ist, 0 - 40 % von weiteren Polymeren, insbesondere Block-Copolymeren, 5 bis 60 Gew.-% mindestens eines klebrigmachenden Harzes, sowie 0 bis 40 Gew.-% Additive.

Ein weiterer Gegenstand der Erfindung ist die Verwendung solcher Schmelzklebstoffen in Verpackungen, die bei niedriger Temperatur gelagert bzw. geöffnet werden können.

Der erfindungsgemäße Schmelzklebstoff enthält mindestens ein Homo- oder Copolymeres auf Basis von Ethylen und/oder Propylen sowie ggf. weiteren copolymerisierbaren Monomeren, das mit aromatischen Bestandteilen modifiziert wurde. Bei den Monomeren, die zusätzlich zu Ethylen oder Propylen eingesetzt werden können, handelt es sich um die bekannten mit Ethylen oder Propylen copolymerisierbaren olefinisch ungesättigte Monomere. Insbesondere handelt es sich um lineare oder verzweigte C₄ bis C₂₀ -α-Olefine, wie Buten, Hexen, Methylpenten, Octen; cyclisch ungesättigte Verbindungen wie Norbonen oder Norbonadien; symmetrisch oder unsymmetrisch substituierte Ethylen-Derivate, wobei als Substituenten C₁ bis C₁₂ -Alkylreste geeignet sind; sowie ggf. ungesättigte Carbonsäuren oder Carbonsäureanhydride. Es kann sich dabei um Homopolymere, Copolymere, Terpolymere handeln, die auch weitere Monomere enthalten können. Im folgenden sollen unter Homo/Copolymere auch solche Polymere aus mehr als 2 Monomeren verstanden werden. Dabei soll bevorzugt die Menge der Comonomere unterhalb 20 % betragen. Diese Homo/Copolymere sind üblicherweise statistisch polymerisiert und sind keine Blockcopolymere.

In einer besonders bevorzugten Ausführungsform werden durch Metallocenkatalyse hergestellte (Co)polymere als Ausgangsbasis zur Modifikation verwendet. Diese (Co)polymere zeichnen sich dadurch aus, dass sie eine enge Molekulargewichtsverteilung aufweisen und besonders bevorzugt, die Comonomeren gleichmäßig über die Molekülkette verteilt sind.

Erfindungsgemäß ist es notwendig, dass diese (Co)polymere mit aromatischen Bestandteilen modifiziert werden, d. h. dass aromatische Bestandteile im Polymer enthalten sind. Dabei ist es in einer Ausführungsform möglich, aromatisch substituierte Olefine einzusetzen, d.h. bei der Polymerisationsreaktion werden direkt aromatisch substituierte Monomere eingesetzt. Dabei kann es sich beispielsweise um vinylaromatische Monomere handeln, wie Styrol oder kernsubstituierte. Styrol-Derivate mit linearen oder verzweigten Alkylsubstituenten, wie α-Methylstyrol, p-tert.-Butylmethylstyrol, 1,3-Dimethylstyrol oder alkoxylierte Styrol-Derivate. Eine bevorzugte Ausführungsform verwendet Styrol als Monomeres bei der Polymerisation. Dabei ist als Basismonomer Propylen bevorzugt.

In einer weiteren Ausführungsform werden die Homo- oder Copolymere nach der Polymerisation modifiziert. Dazu werden diese (Co)polymere nach bekannten Verfahren mit radikalischen Initiatoren und mit olefinisch ungesättigten, aromatisch substituierten Verbindungen durch eine Pfropfreaktion umgesetzt. Dabei handelt es sich bevorzugt die bereits oben erwähnten aromatischen ungesättigten Verbindungen, wie Styrol, α-Methylstyrol oder alkylsubstituierte Styrolderivate.

Die so erhaltenen aromatisch modifizierten (Co)polymere weisen ein Molekulargewicht von 1000 bis zu 100000 g/mol auf, insbesondere von 1000 bis zu 50000, besonders bevorzugt bis zu 25000 g/mol (Molekulargewicht als Zahlenmittel (M_{N}), bestimmt über GPC-Methode). Der Gehalt an aromatischen Monomeren soll im Bereich von 1 bis 20 mol % bezogen auf die Monomeren betragen. Die Viskosität beträgt 50 bis 2000 mPas, bevorzugt 100 bis zu 1000 mPas, insbesondere unter 500 mPas bei 170° C, besonders bevorzugt liegt die Viskosität zwischen 100 und 1000 mPas bei 140° C (Viskosität gemessen mit Brookfield Thermosel, Spindel 27, bei angegebener Temperatur). Der Erweichungspunkt der Polymere soll unterhalb von 200° C liegen, insbesondere unterhalb von 160° C. Die Polymere werden erfindungsgemäß in einer Menge von ungefähr 1 bis 40 Gew.-% eingesetzt.

Als weiterer Bestandteil des erfindungsgemäßen Schmelzklebstoffs sind 5-80 Gew.-% eines weiteren Polyolefins auf Basis von Ethylen und/oder Propylen zusammen mit C₄ bis C₂₀ -α-Olefinen enthalten. Diese Polyolefine werden über Metallocen-Katalyse hergestellt. Es handelt sich dabei häufig um amorphe ataktische Polyolefine. Dabei kann es sich um die gleichen Polymere handeln, die als Basispolymer für die aromatisch modifizierten Polymere beschrieben wurden. In diesem Falle sind die Polymere jedoch nicht aromatisch modifiziert, d.h. sie sollen keine aromatischen Anteile enthalten. Eine Ausführungsform der Erfindung verwendet solche Co- oder Terpolymere auf Basis von C₂/C₄ bis C₂₀ -α-Olefinen. Eine andere Ausführungsform verwendet C₃/C₄ bis C₂₀ -α-Polyolefine. Das Molekulargewicht dieser Polymere liegt üblicherweise unter 200000 g/mol, insbesondere unter 100000 g/mol, ganz besonders bevorzugt unter 30000 g/mol. Die Untergrenze beträgt 1000 g/mol, bevorzugt 1500 g/mol. Der Schmelzindex dieser Polymere soll größer als 5 g/10 min betragen, bevorzugt mehr als 30 g/10 min, insbesondere über 100g/10 min betragen (Schmelzindex gemessen bei 190°C und 2,16kg).

Diese Polymere sind in der Literatur bekannt und können von verschiedenen Herstellern kommerziell erhalten werden. Bei dem aromatisch modifizierten Homo-oder Coplymeren und/oder bei dem nicht modifizierten Polyolefin kann es sich um jeweils ein Polymer handeln, es ist jedoch auch möglich, dass für jeden Bestandteil ein Gemisch aus bis zu drei Polymeren eingesetzt wird.

Als zusätzlichen optionalen Bestandteil kann der erfindungsgemäße Schmelzklebstoff 0-40 Gew.-% von weiteren Polymeren enthalten. Diese Polymere können verschiedene anwendungstechnische Eigenschaften des Schmelzklebstoffs verbessern, z. B. Kohäsion, Wärmestandfestigkeit, Kälteflexibilität, Offene Zeit und insbesondere die Klebkraft des aufgetragenen Klebstoffs. Vorzugsweise sind diese Polymere verträglich mit den aromatisch modifizierten Copolymeren, insbesondere sollen sie mit einem ggf. vorhandenen Styrol-Anteil des modifizierten Copolymeren verträglich sein. Diese weiteren Polymere sollen keine unter den Herstell-und Lagerbedingungen vernetzenden Gruppen aufweisen.

Es kann sich dabei beispielsweise um kautschukartige Block-Copolymere handeln, die Styrol enthalten und linear oder radial aufgebaut sind, wie SIS, SBS, SIBS und vorzugsweise SEBS und SEPS. Weitere Beispiele sind Polybuten oder seine Copolymere, Polymethylvinylether u. ä. Polymere sowie Polyphenylenoxid und Modifikationen davon. Dabei sollen diese zusätzlichen Polymere bei Raumtemperatur fest sein und sich homogen mit dem Schmelzklebstoff mischen lassen. Eine Mikrophasenstruktur ist dabei nicht ausgeschlossen.
Gegebenenfalls können die weiteren Polymeren zum Beispiel durch Pfropfung funktionalisiert sein. Ein bevorzugtes Pfropfungsmittel stellen Dicarbonsäuren und deren Anhydride dar.

Als weiteren Bestandteil enthält der erfindungsgemäße Schmelzklebstoff mindestens ein klebrigmachendes Harz. Das Harz bewirkt eine zusätzliche Klebrigkeit und verbessert die gegenseitige Verträglichkeit der Schmelzklebstoff-Komponenten. Es wird in einer Menge von 5 bis 60 Gew.-% , bevorzugt 10 bis 50 Gew.-%, eingesetzt. Es handelt sich dabei insbesondere um Harze, die einen Erweichungspunkt von 70 bis 140°C (ASTM-Methode E28-58T) besitzen. Es sind dieses z.B. aromatische, aliphatische oder cycloaliphatische KohlenwasserstoffHarze, sowie modifizierte oder hydrierte Derivate. Solche im Rahmen der Erfindung anwendbare Harze sind z.B. Terpen-Harze, wie Terpolymere oder Copolymere des Terpens, modifizierte Naturharze wie Harzsäuren aus Balsamharz, Tallharz oder Wurzelharz, ggf. auch Hydroabietylalkohol und seine Ester, Acrylsäure-Copolymerisate, wie Styrol-Acrylsäure-Copolymere und Harze auf Basis funktioneller Kohlenwasserstoffharze. Bevorzugt ist es partiell polymerisiertes Tallharz, hydriertes Kohlenwasserstoffharz und Kolophoniumharze einzusetzen.

Die erfindungsgemäßen Schmelzklebstoffe können neben den oben genannten Bestandteilen noch weitere, üblicherweise in Schmelzklebstoffen eingesetzte Bestandteile als Additive enthalten. Hierzu zählen beispielsweise Weichmacher, Stabilisatoren, Wachse, Haftvermittler und Antioxidantien. Damit können bestimmte anwendungstechnischen Eigenschaften, wie z. B. Kohäsionsfestigkeit, Viskosität, Erweichungspunkt beeinflusst werden. Weiterhin können Füllstoffe zur Festigkeitserhöhung und ggf. der Kostenreduzierung eingesetzt werden.

Gegebenenfalls können dem Schmelzklebstoff Wachse in Mengen von 0 bis 40 Gew.-% zugegeben werden, bevorzugt 5 bis etwa 25 Gew.-% . Die Menge ist dabei so bemessen, dass einerseits die Viskosität auf den gewünschten Bereich abgesenkt wird, andererseits aber die Adhäsion nicht negativ beeinflusst wird. Das Wachs kann natürlichen, ggf. auch in chemisch modifizierter Form, oder synthetischen Ursprungs sein. Als natürliche Wachse können pflanzliche Wachse, tierische Wachse eingesetzt werden oder Mineralwachse oder petrochemische Wachse. Als chemisch modifizierte Wachse können Hartwachse wie Montanesterwachse, Sarsolwachse usw. eingesetzt werden. Als synthetische Wachse finden Polyalkylenwachse sowie Polyethylenglykolwachse Verwendung. Vorzugsweise werden petrochemische Wachse wie Petrolatum, Paraffinwachse, mikrokristalline Wachse sowie synthetische Wachse eingesetzt.

Weichmacher werden vorzugsweise zum Einstellen der Viskosität oder der Flexibilität verwendet und sind in dem erfindungsgemäßen Schmelzklebstoff im allgemeinen in einer Konzentration von 0 bis 20 Gew.-%, vorzugsweise in einer Konzentration von 1 bis 10 Gew.-%, enthalten. Geeignete Weichmacher sind medizinische Weißöle, naphtenische Mineralöle, Polypropylen-, Polybuten-, Polyisopren-Oligomere, hydrierte Polyisopren- und/oder Polybutadien-Oligomere, Benzoatester, Phthalate, Adipate, pflanzliche oder tierische Öle und deren Derivate. Hydrierte Weichmacher werden beispielsweise ausgewählt aus der Gruppe der paraffinischen Kohlenwasserstofföle. Auch Polypropylenglykol und Polybutylenglykol, sowie Polymethylenglykol sind geeignet. Ggf. werden auch Ester als Weichmacher eingesetzt, z. B. flüssige Polyester und Glycerinester oder Weichmacher auf Basis aromatischer Dicarbonsäureester. Ebenso können auch Alkylmonoamine und Fettsäuren mit vorzugsweise 8 bis 36 C-Atomen geeignet sein.

Die Stabilisatoren haben die Aufgabe, die Klebstoffzusammensetzung während der Verarbeitung vor Zersetzung zu schützen. Hier sind insbesondere die Antioxidantien zu nennen oder auch Lichtschutzmittel. Sie werden üblicherweise in Mengen bis zu 3 Gew.-%, vorzugsweise in Mengen von etwa 0,1 bis 1,0 Gew.-% dem Schmelzklebstoff beigefügt.

Weitere Additive können in den Schmelzklebstoff mit aufgenommen werden, um bestimmte Eigenschaften zu variieren. Das können beispielsweise Farbstoffe oder Füllstoffe wie Titandioxid, Talkum, Ton und dergleichen sein.

Darüber hinaus kann der erfindungsgemäße Schmelzklebstoff Haftvermittler enthalten. Haftvermittler sind Stoffe, die die Adhäsion des Schmelzklebstoffs zu dem zu verklebenden Substrat verbessern.Insbesondere sollen Haftvermittler das Alterungsverhalten von Klebungen unter Einfluss von feuchter Atmosphäre verbessern. Typische Haftvermittler sind zum Beispiel Ethylen/Acrylamid-Comonomere, polymere Isocyanate, reaktive siliciumorganische Verbindungen oder Phosphorderivate. Ebenso können die Benetzungseigenschaften des Klebstoffs und damit das Haftvermögen auf den Substraten beeinflusst werden.

Die Additive, wie Weichmacher, Stabilisatoren oder Haftvermittler sind dem Fachmann bekannt. Es sind kommerzielle Produkte und der Fachmann kann sie entsprechend den gewünschten Eigenschaften auswählen. Dabei ist darauf zu achten, dass eine Verträglichkeit mit der Polymermischung gegeben ist.

Der erfindungsgemäße Schmelzklebstoff wird im allgemeinen durch Mischen hergestellt. Dabei können alle Komponenten gleichzeitig vorgelegt, erwärmt und dann homogenisiert werden, oder es werden zuerst die leichter schmelzenden Komponenten vorgelegt und gemischt, danach die weiteren Harzbestandteile zugegeben und zum Schluss weitere Additive, die ggf. gegen erhöhte Temperatur empfindlich sind, zufügt. Es ist auch möglich, den Schmelzklebstoff kontinuierlich in einem Extruder herzustellen. Nach dem Abfüllen oder Portionieren der vollständig homogenisierten Mischung lässt man diese abkühlen, wobei sie erstarrt. Der erfindungsgemäße Schmelzklebstoff ist von fester Konsistenz und bis auf Verunreinigungen frei von Lösemitteln. Er ist homogen und auch in der Schmelze ist keine Separation der Polymerbestandteile festzustellen. Verfahren zur Herstellung, Abfüllung und Verpackung erfindungsgemäßer Schmelzklebstoffe sind dem Fachmann bekannt.

Das Applikationsverfahren ist abhängig von der Art des zu verklebenden Substrats und den geeigneten Maschinen dafür. Es kann sich um punktförmigen Auftrag, flächenförmigen Auftrag oder streifenförmigen Auftrag handeln. Das Auftragen kann durch Applikation über Sprühdüsen, durch Extrusionsbeschichtung oder durch Walzenauftragssysteme geschehen.

Die erfindungsgemäßen Schmelzklebstoffe weisen eine Viskosität auf, die auf die üblichen Auftragsverfahren abgestimmt sind. Dabei besitzen die Schmelzklebstoffe eine Viskosität von 100 bis 30000 mPas, vorzugsweise 400 bis 20000 mPas, insbesondere 500 bis 5000 mPas bei einer Temperatur von 160° C (Viskosität gemessen mit Brookfield Thermosel, Spindel 27, bei angegebener Temperatur).

Bei der Anwendung ist es zweckmäßig, einen Schmelzklebstoff mit möglichst geringer Viskosität bei Applikationstemperatur zu verwenden. Dadurch wird eine bessere Auftragbarkeit sowie eine leichtere Förderbarkeit des Schmelzklebstoffs gewährleistet. Ebenso wird die Benetzung des Substrats dadurch gefördert. Nach dem Auftragen auf die eine Substratoberfläche muss die der Luft zugewandte Seite des Schmelzklebstoffs möglichst lange klebrig und haftfähig bleiben. Diese offene Zeit ist von dem Schmelzverhalten und Kristallisationsverhalten des Schmelzklebstoffes abhängig. Durch die Auswahl der erfindungsgemäß einzusetzenden Polymerkomponenten aus aromatisch modifizierten Polyolefinhomo- oder Copolymeren in Verbindung mit nicht aromatisch modifizierten Olefinpolymeren wird eine lange Offenzeit erhalten, d. h. auch ein Verbinden mit der zweiten Substratoberfläche ist noch nach einem größeren Zeitraum gegeben. Nachdem beide Substrate auf den Schmelzklebstoff gepresst wurden, wird eine relativ kurze Abbindezeit des Schmelzklebstoffs erzielt. Innerhalb dieses Zeitraums baut sich die Verklebung zwischen beiden Substratoberflächen auf.

Die erfindungsgemäßen Schmelzklebstoffe werden zum Verkleben von Substraten wie unlackiertes oder beschichtetes Papier bzw. entsprechende Pappen, Folien, Kunststoffe oder Glas verwendet, sowie für andere Anwendungen. Daraus können Mehrschichtfolien hergestellt werden oder Behälter wie Faltschachteln, Umkartons, trays. Die erfindungsgemäßen Schmelzklebstoffe zeichnen sich insbesondere durch eine sehr gute Adhäsion auf den vorgenannten Substraten aus. Eine besondere Eignung ist für solche Verklebungen festzustellen, die tiefen Temperaturen bei Lagerung ausgesetzt werden. Die so verklebten Flächen bleiben auch bei niedriger Temperatur flexibel. Zusätzlich zeigen die mit einem erfindungsgemäßen Klebstoff hergestellten Verklebungen eine gute Verbundfestigkeit, auch bei Lagerung bei tiefen oder erhöhten Temperaturen ohne an Flexibilität zu verlieren, zu kriechen oder einen spürbaren Kohäsiosveriust aufzuweisen.

Die vorliegende Erfindung wird nachfolgend durch Beispiele näher erläutert.

### Beispiele :

| Beispiel 1: | | |
|---|---|---|
| 50 Teile | Ethylen/1-Octen Copolymer | (Affinity GA 1900) |
| 20 Teile | Klebrigharz ,Kohlenwasserstoffharz | (Arkon M 100) |
| 20 Teile | Paraffinwachs | (Sasolwachs 6703) |
| 10 Teile | Styrol-modifiziertes Polyolefinharz | (Licocene PE ST 4361) |

| Beispiel 2: | | |
|---|---|---|
| 50 Teile | Propylen/Ethylen Copolymer | (Licocene 1502) |
| 20 Teile | Klebrigharz ,Kohlenwasserstoffharz | (Arkon M 100) |
| 12 Teile | Propylen Copolymer Wachs | (Licocene 1302) |
| 10 Teile | Styrol-modifiziertes Polyolefinharz | (Licocene PE ST 4361) |
| 8Teile | Styrol-Block-Copolymer | (Kraton G 1657) |

| Beispiel 3 (Vergleich): | | |
|---|---|---|
| 50 Teile | Ethylen/1-Octen Copolymer | (Affinity GA 1900) |
| 20 Teile | Klebrigharz, Kohlenwasserstoffharz | (Arkon M 100) |
| 10 Teile | Paraffinwachs | (Paraflint H1) |
| 20 Teile | Paraffinwachs | (Sasolwachs 6703) |

| Beispiel 4 (Vergleich): | | |
|---|---|---|
| 50 Teile | Ethylen/1-Octen Copolymer | (Affinity GA 1900) |
| 20 Teile | Klebrigharz ,Kohlenwasserstoffharz | (Arkon M 100) |
| 10 Teile | Paraffinwachs | (Sasolwachs 6703) |
| 20 Teile | Paraffinwachs | (Paraflint H1) |

### Verfahren:

Die Bestandteile 1-4 werden in einem handelsüblichen Laborrührgerät bei 160° C gemischt und so lange gerührt, bis sie homogen sind. Danach werden sie zum Abkühlen in geeignete Gefäße abgefüllt.

### Ergebnisse:

| | Beispiel 1 | Beispiel 2 | Beispiel 3 | Beispiel 4 |
|---|---|---|---|---|
| Viskosität [mPas] | 1170 | 1700 | 1180 | 1120 |
| Offene Zeit [sec] | 15 | 15 | 15 | 6 |
| Abbindezeit [sec] | 3 | 5 | 8 | 3 |
| Adhäsion (25°C) | + | ++ | + | - |
| Adhäsion (-10°C) | + | ++ | - | - |

### Testverfahren:

- Viskosität:: 160°C; Brookfield Thermosel , Spindel 27
- Offene Zeit:: Mit einem Rakel werden bei 170°C Klebstoffstreifen aufgetragen und in zeitlichem Abstand nacheinander mit Papierstreifen und leichten Druck abgedeckt. Durch Abreißen wird die Zeit bestimmt, nach der eine Verklebung nicht mehr möglich ist.
- Abbindezeit:: Klebstoffprüfgerät der Fa. Inatec
Bei festgelegter Auftragstemperatur wird eine definierte Menge Klebstoff aufgetragen und nach einem festgelegten Zeitraum (kleiner der Offenzeit) mit einem zweiten Substrat abgedeckt. Nach verschiedenen Zeiträumen wird die Probe abgerissen und die Zugkraft gemessen. Die Abbindezeit ist die Zeit, bei der das Maximum der Klebkraft gemessen wird.
- Adhäsion:: - Adhäsionbruch + Faserbruch ++ intensiver Faserbruch Es werden bei definierten Bedingungen zwei Wellpappenstreifen aus Kraftliner Papier miteinander verklebt und 2 Tage gelagert. Danach werden die Proben 3 Std. bei der Messtemperatur gelagert und durch Abreißen dann getestet.

Bei dem erfindungsgemäßen Schmelzklebstoff wird eine lange offene Zeit zusammen mit einer kurzen Abbindezeit erhalten.
Die Klebkraft, insbesondere bei niedriger Temperatur, ist verbessert.

## Patentansprüche

1. Schmelzklebstoff, enthaltend
| | |
|---|---|
| 1 bis 40 Gew.-% | mindestens eines Homo- oder Copolymeren auf Basis von Ethylen und/oder Propylen, das mit aromatischen Bestandteilen modifiziert wurde, |
| 5 bis 80 Gew.-% | mindestens eines weiteren nicht aromatisch modifizierten Olefin-Copolymeren auf Basis Ethylen- und/oder Propylen- und C₄ bis C₂₀-α-Olefinen, das durch Metallocenekatalysierte Polymerisation erhältlich ist, |
| 5 bis 60 Gew.-% | mindestens eines klebrigmachenden Harzes, |
| 0 bis 40 Gew.-% | weitere Polymere |
| 0 bis 40 Gew.% | Additive. |

2. Schmelzklebstoff nach Anspruch 1, **dadurch gekennzeichnet, dass** das modifizierte Homo- oder Copolymere eine Viskosität kleiner 1000 mPas bei 170 °C aufweist.

3. Schmelzklebstoff nach Anspruch 1 oder 2, **dadurch gekennzeichnet, dass** das modifizierte Polymere ein Ethylen- oder Propylenhomopolymer oder ein Ethylen und/oder Propylen/C₄ bis C₂₀-α-Olefin-Copolymeres ist, das durch Metallocen-katalysierte Polymerisation erhältlich ist.

4. Schmelzklebstoff nach Anspruch 3, **dadurch gekennzeichnet, dass** das modifizierte Copolymere auf Basis von Propylen durch Einpolymerisieren von α, βungesättigten, aromatisch substituierten Olefinen erhalten wird.

5. Schmelzklebstoff nach Anspruch 4, **dadurch gekennzeichnet, dass** als aromatisch substituiertes Olefin ein Styrol oder substituiertes Styrolderivat eingesetzt wird.

6. Schmelzklebstoff nach Anspruch 1 bis 3, **dadurch gekennzeichnet, dass** das modifizierte (Co)polymer durch Pfropfen von α,β-ungesättigten aromatisch substituierten Monomeren auf ein Homo- oder Copolymer erhalten wurde.

7. Schmelzklebstoff nach Anspruch 6, **dadurch gekennzeichnet, dass** das aromatisch substituierte Monomer Styrol oder ein substituiertes Styrol-Derivat ist.

8. Schmelzklebstoff nach einem der Ansprüche 1 bis 7, **dadurch gekennzeichnet, dass** das modifizierte (Co)polymer ein Molekulargewicht von 1000 bis 50000 g/mol aufweist.

9. Schmelzklebstoff nach einem der Ansprüche 1 bis 8, **dadurch gekennzeichnet, dass** das nicht modifizierte Polyolefin ein Molekulargewicht von 1500 bis 100000 g/mol aufweist.

10. Schmelzklebstoff nach Anspruch 9, **dadurch gekennzeichnet, dass** das Polyolefin ein Propylen/C₄ bis C₁₂-α-Olefin-Copolymer oder ein Ethylen/ C₃ bis C₁₂α-Olefin-Copolymer ist.

11. Schmelzklebstoff nach einem der Ansprüche 1 bis 10, **dadurch gekennzeichnet, dass** zusätzlich ein oder mehrere Polymere ausgewählt aus BlockCopolymeren, Polyphenylenoxid, Polymethylvinylether, Polybuten enthalten sind.

12. Schmelzklebstoff nach Anspruch 11, **dadurch gekennzeichnet, dass** die Polymere styrolhaltige Block-Copolymere wie SIS, SBS, SIBS, und vorzugsweise SEBS und SEPS sind.

13. Schmelzklebstoff nach einem der Ansprüche 11 und 12, **dadurch gekennzeichnet, dass** die Polymere gegebenenfalls durch Pfropfung funktionalisiert sind.

14. Schmelzklebstoff nach einem der Ansprüche 1 bis 13, **dadurch gekennzeichnet, dass** als Additiv 5 bis 25 % eines Wachses enthalten sind.

15. Verwendung eines Schmelzklebstoffs nach einem der Ansprüche 1 bis 13 zum Verkleben von Verpackungen und von Kartonagen.

## Claims

1. A hot melt adhesive, containing
| | |
|---|---|
| 1 to 40% by weight | of at least one homo- or co-polymer based on ethylene and/or propylene, which was modified with aromatic components, |
| 5 to 80% by weight | of at least one other non-aromatically modified olefin copolymer based on ethylene and/or propylene and C₄-C₂₀-α-olefins which may be obtained by metallocene-catalyzed polymerization, |
| 5 to 60% by weight | of at least one tackifying resin, |
| 0 to 40% by weight | of other polymers, |
| 0 to 40% by weight | of additives. |

2. The hot melt adhesive according to claim 1, **characterized in that** the modified homo- or co-polymer has a viscosity less than 1,000 mPa.s at 170°C.

3. The hot melt adhesive according to claim 1 or 2, **characterized in that** the modified polymer is an ethylene or propylene homopolymer or an ethylene and/or propylene/C₄-C₂₀ α-olefin copolymer which may be obtained by metallocene-catalyzed polymerization.

4. The hot melt adhesive according to claim 3, **characterized in that** the modified copolymer based on propylene is obtained by polymerization of α,β-unsaturated, aromatic-substituted olefins.

5. The hot melt adhesive according to claim 4, **characterized in that** a styrene or substituted styrene derivative is used as an aromatic-substituted olefin.

6. The hot melt adhesive according to claim 1 to 3, **characterized in that** the modified (co)polymer was obtained by grafting α,β-unsaturated aromatic-substituted monomers on a homo- or co-polymer.

7. The hot melt adhesive according to claim 6, **characterized in that** the aromatic-substituted monomer is styrene or a substituted styrene derivative.

8. The hot melt adhesive according to any of claims 1 to 7, **characterized in that** the modified (co)polymer has a molecular weight from 1,000 to 50,000 g/mol.

9. The hot melt adhesive according to any of claims 1 to 8, **characterized in that** the non-modified polyolefin has a molecular weight from 1,500 to 100,000 g/mol.

10. The hot melt adhesive according to claim 9, **characterized in that** the polyolefin is a propylene/C₄-C₁₂ α-olefin copolymer or an ethylene/C₃-C₁₂ α-olefin copolymer.

11. The hot melt adhesive according to any of claims 1 to 10, **characterized in that** additionally one or more polymers selected from block copolymers, polyphenylene oxide, polymethylvinylether, polybutene are contained therein.

12. The hot melt adhesive according to claim 11, **characterized in that** the polymers are styrene-containing block copolymers such as SIS, SBS, SIBS, and preferably SEBS and SEPS.

13. The hot melt adhesive according to any of claims 11 and 12, **characterized in that** the polymers are functionalized if necessary by grafting.

14. The hot melt adhesive according to any of claims 1 to 13, **characterized in that** 5 to 25% of a wax are contained as an additive.

15. The use of a hot melt adhesive according to any of claims 1 to 13 for gluing together packagings and cardboard packagings.

## Revendications

1. Adhésif en masse fondue, contenant
| | |
|---|---|
| 1 à 40% en poids | d'au moins un homopolymère ou copolymère à base d'éthylène et/ou de propylène, qui a été modifié avec des constituants aromatiques, |
| 5 à 80% en poids | d'au moins un autre copolymère d'oléfine non aromatiquement modifié à base d'éthylène et/ou de propylène et d'α-oléfines en C₄ à C₂₀, qui peut être obtenu par une polymérisation catalysée par un métallocène, |
| 5 à 60% en poids | d'au moins une résine qui rend adhésif, |
| 0 à 40% en poids | d'autres polymères, |
| 0 à 40% en poids | d'additifs. |

2. Adhésif en masse fondue selon la revendication 1, **caractérisé en ce que** l'homopolymère ou le copolymère modifié présente une viscosité inférieure à 1000 mPa.s à 170°C.

3. Adhésif en masse fondue selon la revendication 1 ou 2, **caractérisé en ce que** le polymère modifié est un homopolymère d'éthylène ou de propylène ou un copolymère d'éthylène et/ou de propylène/α-oléfine en C₄ à C₂₀, qui peut être obtenu par une polymérisation catalysée par un métallocène.

4. Adhésif en masse fondue selon la revendication 3, **caractérisé en ce que** le copolymère modifié à base de propylène est obtenu par copolymérisation d'oléfines α,β-insaturées, aromatiquement substituées.

5. Adhésif en masse fondue selon la revendication 4, **caractérisé en ce qu'**on utilise comme oléfine aromatiquement substituée un styrène ou un dérivé substitué du styrène.

6. Adhésif en masse fondue selon la revendication 1 à 3, **caractérisé en ce que** le (co)polymère modifié est obtenu par greffage de monomères aromatiquement substitués α,β-insaturés sur un homopolymère ou un copolymère.

7. Adhésif en masse fondue selon la revendication 6, **caractérisé en ce que** le monomère aromatiquement substitué est du styrène ou un dérivé substitué du styrène.

8. Adhésif en masse fondue selon l'une quelconque des revendications 1 à 7, **caractérisé en ce que** le (co)polymère modifié présente un poids moléculaire de 1000 à 50 000 g/mole.

9. Adhésif en masse fondue selon l'une quelconque des revendications 1 à 8, **caractérisé en ce que** la polyoléfine non modifiée présente un poids moléculaire de 1500 à 100 000 g/mole.

10. Adhésif en masse fondue selon la revendication 9, **caractérisé en ce que** la polyoléfine est un copolymère de propylène/α-oléfine en C₄ à C₁₂ ou d'éthylène/α-oléfine en C₃ à C₁₂.

11. Adhésif en masse fondue selon l'une quelconque des revendications 1 à 10, **caractérisé en ce qu'**en outre un ou plusieurs polymères choisis parmi les copolymères à blocs, le poly(oxyde de phénylène), le polyméthylvinyléther, le polybutylène sont contenus.

12. Adhésif en masse fondue selon la revendication 11, **caractérisé en ce que** les polymères sont des copolymères à blocs contenant du styrène, tels que le SIS, le SBS, le SIBS, et de préférence le SEBS et le SEPS.

13. Adhésif en masse fondue selon l'une quelconque des revendications 11 et 12, **caractérisé en ce que** les polymères sont le cas échéant fonctionnalisés par greffage.

14. Adhésif en masse fondue selon l'une quelconque des revendications 1 à 13, **caractérisé en ce que** 5 à 25% d'une cire sont contenus comme additif.

15. Utilisation d'un adhésif en masse fondue selon l'une quelconque des revendications 1 à 13 pour le collage d'emballages et de cartonnages.
